# EUROPEAN PATENT SPECIFICATION

(11) **EP 4 641 176 B1**
(45) Date of publication and mention of the grant of the patent: **28.10.2026**
(21) Application number: 24382449.7
(22) Date of filing: 24.04.2024
(51) Int. Cl.: G01N 21/88, G01N 21/89

(54) **VISION SYSTEM FOR AN INSPECTION APPARATUS**
SICHTSYSTEM FÜR EINE INSPEKTIONSVORRICHTUNG
SYSTÈME DE VISION POUR UN APPAREIL D'INSPECTION

(43) Date of publication of application: 29.10.2025
(73) Proprietor: Automatizacion y Sistemas de Inspeccion en Linea Global, S.L., 33207 Gijón Asturias (ES)
(72) Inventor: PÉREZ MÉNDEZ, Antonio, 33207 Gijón (Asturias) (ES); RODRÍGUEZ SÁNCHEZ, Juan Ignacio, 33207 Gijón (Asturias) (ES)
(74) Representative: TRBL Intellectual Property

(56) References cited:
- WO-A1-2011/037903
- WO-A1-94/18643
- JP-A- 2013 142 635
- US-A- 5 684 530
- US-A1- 2019 204 236

## Description

### FIELD OF THE INVENTION

The present invention belongs to the technical field of vision systems. More specifically, the invention relates to a vision system configured to provide images in an inspection apparatus.

### BACKGROUND OF THE INVENTION

In an assembly line, it is advisable to count on a vision system to inspect the quality of the products which are manufactured. These vision systems are configured to acquire images of the products. These images are sent to a processor which analyses the data and evaluates if some of the products are unacceptable.

These vision systems must adapt to the requirements of the inspection apparatus where they are installed. In some cases, these requirements are related to the range of vision and in other cases they are related to their shape or dimensions.

Document EP2350621 B1 discloses an inspection method of inspecting welds of packages across an inspection width, with an inspection device including a camera having an objective lens and at least one light source for illuminating the welds. This method comprises interposing, between the lens of the camera and the packages, a frontal optical system of positive focal length covering at least the entire inspection width of the packages so that the distance between said frontal optical system and the package is strictly less than the focal length of said frontal optical system, and in taking weld images in order to detect the presence of defects.

Document EP2082216B1 provides an alternative method for inspecting objects which involves driving a light source (organic LED) using a driving unit such that the light source successively produces two types of light, where one type of light being homogeneous light, and other type of light is formed of dark zones and clear zones alternated with a discontinuous spatial variation. An image of a transparent or translucent object is captured in moving when the object is lighted successively by the types of light. The image captured with the types of light is analyzed to respectively detect high contrast defects and low contrast defects. An independent claim is also included for a device for inspecting a transparent or translucent object.

Document WO 2011/037903 A1 discloses a high-speed optical inspection system for a workpiece (e.g., a printed-circuit board) that moves through a planar inspection zone defined by an inspection plane.

Document WO 9418643 A1 discloses an inspection system for a moving surface, e.g., a metal sheet or continuous web, in which the object passes continuously through an inspection region. Illumination is provided by two different light types, bright-field and dark-field, generated by separate light sources.

Document JP 2013-142635 A discloses an inspection device for laminated optical members, such as LCD panels, in which the panel is conveyed through a planar inspection zone and examined from both its front and back sides .

Document US 5 684 530 A provides an illumination system that creates a long, uniform, diffused light field for use with line-scan cameras, copiers or other machine-vision devices.

Document US 2019/204236 A1 relates to a machine-vision illumination system that provides uniform lighting of a curved surface of a unit-under-test, such as electronic boards, automotive components, by using a light-emitting element together with a diffuser element .

In view of the above, there is a need in the field of alternative systems which may allow the detection of failures but adapting to strict size requirements.

### BRIEF DESCRIPTION OF THE INVENTION

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

The present invention overcomes the above limitations of the prior art, by providing a vision system for an inspection apparatus as defined in claim 1.

In a first inventive aspect, the invention provides a vision system for an inspection apparatus, wherein the inspection apparatus is configured to present a series of products in an inspection zone and the vision system is configured to acquire images of in the inspection zone, wherein the inspection zone is plane and defines an inspection plane. This vision system comprises:
a plurality of image acquisition devices, wherein each image acquisition device comprises a lens, and all the lenses are contained in a lens plane, and the centre point of every lens is contained in a lens line which is parallel to the inspection plane;
a light source configured to emit diffused light, the light source comprising a light emitting element and a light diffuser, wherein the light diffuser comprises a diffusion structure configured to receive light from the light emitting element and project a diffused light, wherein the light diffuser comprises a plane rectangular zone defined by an upper base, a lower base and two heights, wherein the upper and lower bases are parallel to the inspection plane and the heights are perpendicular to the bases, wherein the upper base is closer to the lens line than the lower base;
wherein
the rectangular plane zone forms an angle comprised between 50° and 70° in a counterclockwise direction with respect to the inspection plane;
the lens plane forms an angle comprised between 2° and 10° in a clockwise direction with respect to the inspection plane;
a first reference plane is defined as a plane containing the lower base and being parallel to the inspection plane;
a second reference plane is defined as a plane containing the upper base and being parallel to the inspection plane
a third reference plane is defined as a plane perpendicular to the inspection plane and containing the upper base.

The vision system comprises a plurality of image acquisition devices (such as cameras) and a light source. The light source is configured to improve the visibility of the inspection zone, so that the images acquisition devices may obtain images of this zone in optimal conditions.

The inspection apparatus is configured to present a series of products in an inspection zone. This can correspond, for example, to the output of a manufacturing apparatus, where the products which are just manufactured are inspected to detect any failure. These products are presented in the inspection zone, so that the vision system may acquire images of these products and send these data to a failure detection software. The inspection zone is plane and defines an inspection plane.

The image acquisition devices comprise a lens, which is configured to direct the light rays to the pupil so that the image data are conveniently acquired. Each lens is contained in a plane, and all the lenses of the different image acquisition devices are contained in a lens plane. This means that all the lenses are arranged at the same distance of the inspection plane. The centre point of every lens is contained in a lens line which is parallel to the inspection plane.

The light source is configured to emit diffused light, so that it can provide uniform light conditions for the inspection zone. To do so, the light source comprises a light emitting element and a light diffuser. Light diffusion is the scattering and spreading of light in various directions and is produced when light crosses a material without being absorbed, but rather undergoing repeated scattering events which change the direction of their path. Hence, this diffusion structure is configured to receive light from the light emitting element and project a diffused light. The diffusion of light allows the reflected light be received by the image acquisition means, since the diffused light reaches all the inspection zone in an homogeneous way.

In the present invention, the light diffuser comprises a plane rectangular zone defined by an upper base, a lower base and two heights, wherein the upper and lower bases are parallel to the inspection plane and the heights are perpendicular to the bases, wherein the upper base is closer to the lens line than the lower base. This does not mean that the light diffuser has a rectangular shape, but the fact is that a rectangular shape can be easily identified within this light diffuser. The upper and lower bases are used to define the distances between the light diffuser and the rest of the elements contained in the vision system.

In particular, the rectangular plane zone forms an angle comprised between 50° and 70° in a counterclockwise direction with respect to the inspection plane. This means that, starting from the inspection plane and counting the angle in a counterclockwise direction, the rectangular plane zone is found after (or including) 50° and before (or including) reaching 70°.

Also, the lens plane forms an angle comprised between 2° and 10° in a clockwise direction with respect to the inspection plane. This means that, starting from the inspection plane and counting the angle in a clockwise direction, the lens plane zone is found after (or including) 2° and before (or including) reaching 10°.

For a better definition of further geometrical relations, a first reference plane is defined as a plane containing the lower base and being parallel to the inspection plane, a second reference plane is defined as a plane containing the upper base and being parallel to the inspection plane and a third reference plane is defined as a plane perpendicular to the inspection plane and containing the upper base.

This vision system aims different advantages. First one is the provision of a compact device which is able to acquire images of the inspection zone but keeping the total length of the system (measured in the advance direction of the inspected products) as short as possible. An aggressive angle of the diffuser element, together with the position of the image acquisition devices, is beneficious to achieve this goal. Second advantage is the avoidance of reflections. The size and orientation of the diffuser element provides a uniform light which affects to a wide zone, so that the image acquisition devices may capture images in optimal conditions.

In some particular embodiments, the light emitting element comprises a plurality of solid-state light sources arranged in a light emission plane, wherein the light emission plane is parallel to the plane rectangular zone of the light diffuser.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas. These light sources are specifically advantageous, since they provide the required luminous properties for the automotive regulations with a high efficiency and reliability.

The arrangement of the solid-state sources in a plane parallel to the light diffuser improves the homogeneity of the diffused light.

In some particular embodiments, the distance between the lens line and the first reference plane is comprised between 1.1 and 1.4 times the distance between the first reference plane and the inspection plane.

The distance between the lens line and the end of the light diffuser (defined by the first reference plane) is greater than the distance between this first reference plane and the inspection plane. This means that the light diffuser takes a relevant space, which is greater than the distance from this diffuser to the object to be inspected. This ensures that the light projected by the diffuser reaches the inspection zone in good conditions and allows maximizing the inspection zone without an excessive length of the vision system.

In some particular embodiments, the diffusion structure comprises processed polycarbonate or poly methyl methacrylate or a combination thereof.

These elements provide a good light diffusion, which causes a homogenization of the light emitted by the light source. This is obtained without a major light loss, as in the event of a frame.

In some particular embodiments, the image acquisition devices are arranged equidistantly from each other along the lens line.

This makes ulterior data processing easier, since all the image acquisition devices have the same weight in the data provision.

In some particular embodiments, the lens line is comprised in the space between the first reference plane and the second reference plane.

The light provided by the light source surrounds the lens line to ensure that the images captured by the image acquisition devices are conveniently illuminated.

In some particular embodiments, the lens line is arranged at one side of the third reference plane and the light diffuser is arranged at the other side of the third reference plane.

This arrangement helps the image acquisition devices to be in the reflection line of the light projected by the diffuser.

In some particular embodiments, the distance between the upper base and the lower base is greater than the distance between the first reference plane and the inspection plane. In more particular embodiments, the distance between the upper base and the lower base is comprised between 1.3 and 1.6 times the distance between the first reference plane and the inspection plane.

This arrangement provides a main role to the light source, which ensures that the inspection zone receives all the necessary illumination so that the image acquisition devices may capture the products in an optimal way.

In some particular embodiments, the image acquisition devices have a field of view comprised between 45° and 90°.

In some particular embodiments, the image acquisition devices comprise a synchronized shot device which receives an external signal and is configured to synchronize the shot of the image acquisition devices with the external signal.

This vision system is especially adapted to be included in an assembly line, where a series of products are manufactured and then enter in a revision stage. The assembly line may work in a step-by-step basis and the shots are performed when the products are stopped.

In some particular embodiments, the light source is configured to project diffused light in a continuous manner.

Contrary, the light source does not need to be synchronized with any mechanism, and is turned on during all the process.

### DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 represents a perspective view of a system according to the invention, where the main elements are shown.
Figure 2 is a side view of this vision system, where some geometric relations may be observed.

### Numerical references used in the drawings

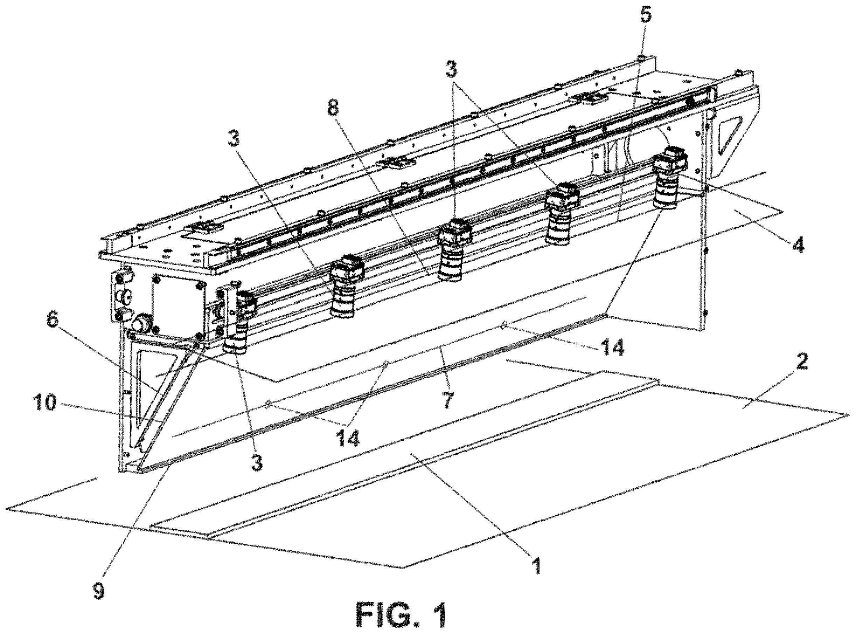

In order to provide a better understanding of the technical features of the invention, the referred Figures 1-2 are accompanied of a series of numerical references which, with an illustrative and non-limiting character, are hereby represented:

| | |
|---|---|
| 1 | Inspection zone |
| 2 | Inspection plane |
| 3 | Cameras |
| 4 | Lens plane |
| 5 | Lens line |
| 6 | LED structure |
| 7 | Light diffuser |
| 8 | Upper base |
| 9 | Lower base |
| 10 | Height |
| 11 | First reference plane |
| 12 | Second reference plane |
| 13 | Third reference plane |
| 14 | LED |
| 15 | Light emission plane |

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

Figure 1 represents a perspective view of a system according to the invention, where the main elements are shown. In this view, some elements of the vision system are hidden, so that the internal elements, which are more relevant than the housing, may be seen.

This vision system comprises a plurality of image acquisition devices, which in this case are cameras 3. These cameras 3 are arranged in such a way that their lenses are contained in the same lens plane 4 and the centre of said lenses are contained in a lens line 5. In this figure, it may be observed how all the cameras 3 are arranged equidistantly from each other along the lens line 5. This arrangement allows the acquisition of images of the products to be inspected. The images captured by these cameras 3 will be processed afterwards by a machine learning model to detect any failure in the products.

The vision system also comprises a light source which comprises two elements: a LED structure 6 and a light diffuser 7. The LED structure 6 comprises a plurality of LEDs 14 which are arranged in an array of two rows and three columns. Needless to say, the dimensions and structure of this array can be modified depending on the power of the LEDs 14 and the needs of illumination. The light diffuser 7 is configured to receive the light emitted by the LEDs 14 of the LED structure 6 and project a diffused light. Light diffusion is a well-know phenomenon, which consists in scattering and spreading light rays coming from the LEDs in various directions. This is produced when light crosses a material without being absorbed, but rather undergoing repeated scattering events which change the direction of their path. The diffused light reaches the objects to be inspected in an homogeneous non-focused manner. This allows the light reflected by the object to be received by the image cameras 3 in an improved way. To do so, in this particular example of the figures, the diffusion structure comprises processed polycarbonate or poly methyl methacrylate or a combination thereof.

This light diffuser 7 is rectangular and is defined by an upper base 8, a lower base 9 and two heights 10. The upper and lower bases 8, 9 are parallel to the inspection plane 2 and the heights 10 are perpendicular to the bases. The upper base 8 is the base which is closest to the lens line 5. The LEDs are fed by a direct current, and they are not synchronized with any movement, so that the light source is configured to project diffused light in a continuous manner.

The vision system is adapted to be installed in an inspection apparatus, which presents a series of products in an inspection zone 1. Hence, the vision system is configured to acquire images of in this inspection zone 1 to assess the quality of the inspected products. This inspection zone 1 is plane, so it defines an inspection plane 2.

The operation of this system involves a synchronization between the inspection apparatus and the vision system: the inspection apparatus advances a conveyor belt with the products.

This advance is guided by a step machine, which starts the movement and then stops in the next step. When the machine has stopped and the next product is placed in the inspection zone, the inspection apparatus sends a signal to the shot device, so that a shot order is provided to the cameras 3 and they are instructed to capture the images of the products. This synchronization allows the optimal acquisition of images, since the range of view and the focal parameters are constant. Since the light diffuser provides constant light conditions, the identification of failures may be done in an automatic process.

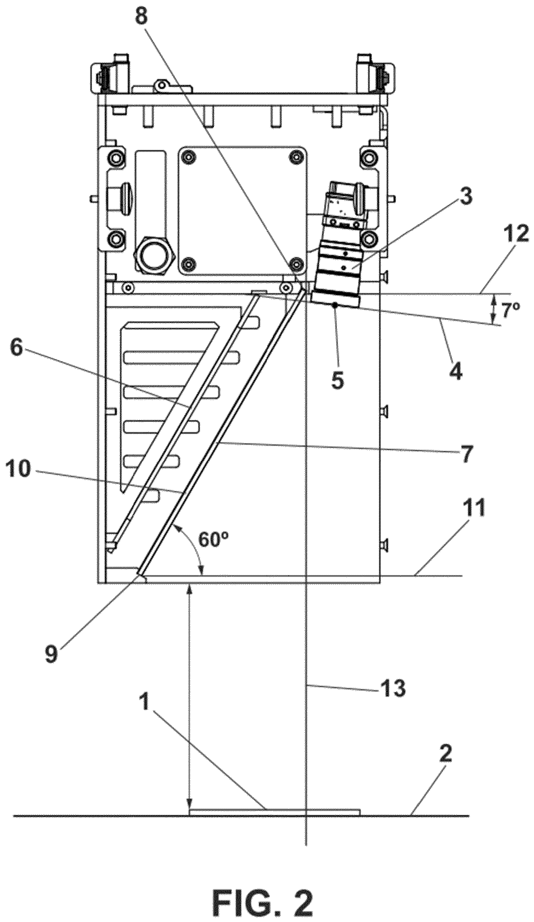

Figure 2 is a side view of this vision system, where some geometric relations may be observed.

Firstly, three reference planes are defined, perpendicular to the view of this figure: a first reference plane 11 defined as a plane containing the lower base 9 (which in this figure is seen as a point, since is perpendicular to the viewer) and being parallel to the inspection plane 2, a second reference plane 12 defined as a plane containing the upper base 8 (which in this figure is also seen as a point) and being parallel to the inspection plane 2 and finally a third reference plane 13 defined as a plane perpendicular to the inspection plane 2 and containing the upper base 8.

It may be observed how the rectangular plane zone of the light diffuser 7 forms an angle comprised between 50° and 70° in a counterclockwise direction with respect to the inspection plane 2. In particular, this angle is 60° in the present example.

The lens plane 4 forms an angle comprised between 2° and 10° in a clockwise direction with respect to the inspection plane 2. In particular, this angle is 7° in the present example.

The light emission plane 15, where the LEDs are contained, is parallel to the plane rectangular zone of the light diffuser 7.

The distance between the lens line 5 and the first reference plane 11 is comprised between 1.1 and 1.4 times the distance between the first reference plane 11 and the inspection plane 2. In this case, it is 1.25 times the distance between the first reference plane 11 and the inspection plane 2.

The distance between the upper base 8 and the lower base 9 is comprised between 1.3 and 1.6 times the distance between the first reference plane 11 and the inspection plane 2.

As may be seen in this figure, the lens line 5 is comprised in the space between the first reference plane 11 and the second reference plane 12. Also, the lens line 5 is arranged at one side of the third reference plane 13 and the light diffuser 7 is arranged at the other side of the third reference plane 13. Thus, the light diffuser 7 projects light which is reflected in the object to be inspected. The reflection of this diffused light reaches the cameras 3, so that the image acquisition may be duly performed.

All the terms and embodiments described anywhere in this document are equally applicable to all aspects of the invention. It should be noted that, as used in the specification and in the appended claims, the singular forms "a", "an", and "the" include their plural referents unless the context clearly indicates otherwise. Similarly, the term "comprises" or "comprising" as used herein also describes "consists of" or "consisting of" in accordance with generally accepted patent practice. Furthermore, any of the parametric ranges described in the examples can be used, in different embodiments of the invention, in isolation or in combination. The scope of the invention is defined in the appended claims.

## Claims

1. Vision system for an inspection apparatus, wherein the inspection apparatus is configured to present a series of products in an inspection zone (1) and the vision system is configured to acquire images of in the inspection zone (1), wherein the inspection zone is plane and defines an inspection plane (2), wherein the vision system comprises:
a plurality of image acquisition devices (3), wherein each image acquisition device (3) comprises a lens, and all the lenses are contained in a lens plane (4), and the centre point of every lens is contained in a lens line (5) which is parallel to the inspection plane (2);
a light source configured to emit diffused light, the light source comprising a light emitting element (6) and a light diffuser (7), wherein the light diffuser (7) comprises a diffusion structure configured to receive light from the light emitting element and project a diffused light, wherein the light diffuser comprises a plane rectangular zone defined by an upper base (8), a lower base (9) and two heights (10), wherein the upper and lower bases (8, 9) are parallel to the inspection plane (2) and the heights (10) are perpendicular to the bases, wherein the upper base (8) is closer to the lens line (5) than the lower base (9);
wherein
the rectangular plane zone forms an angle comprised between 50° and 70° in a counterclockwise direction with respect to the inspection plane (2);
the lens plane (4) forms an angle comprised between 2° and 10° in a clockwise direction with respect to the inspection plane (2);
a first reference plane (11) is defined as a plane containing the lower base and being parallel to the inspection plane;
a second reference plane (12) is defined as a plane containing the upper base and being parallel to the inspection plane
a third reference plane (13) is defined as a plane perpendicular to the inspection plane and containing the upper base.

2. Vision system according to claim 1, wherein the light emitting element comprises a plurality of solid-state light sources (14) arranged in a light emission plane (15), wherein the light emission plane is parallel to the plane rectangular zone of the light diffuser.

3. Vision system according to claim 2, wherein the solid-state light sources (14) are light emitting diodes.

4. Vision system according to any of the preceding claims, wherein the distance between the lens line (5) and the first reference plane (11) is comprised between 1.1 and 1.4 times the distance between the first reference plane (11) and the inspection plane (2).

5. Vision system according to any of the preceding claims, wherein the diffusion structure comprises processed polycarbonate or poly methyl methacrylate or a combination thereof.

6. Vision system according to any of the preceding claims, wherein the image acquisition devices (3) are arranged equidistantly from each other along the lens line (5).

7. Vision system according to any of the preceding claims, wherein the lens line (5) is comprised in the space between the first reference plane (11) and the second reference plane (12).

8. Vision system according to any of the preceding claims, wherein the lens line (5) is arranged at one side of the third reference plane (13) and the light diffuser (7) is arranged at the other side of the third reference plane (13).

9. Vision system according to any of the preceding claims, wherein the distance between the upper base (8) and the lower base (9) is greater than the distance between the first reference plane (11) and the inspection plane (2).

10. Vision system according to claim 9, wherein the distance between the upper base (8) and the lower base (9) is comprised between 1.3 and 1.6 times the distance between the first reference plane (11) and the inspection plane (2).

11. Vision system according to any of the preceding claims, wherein the image acquisition devices (3) have a field of view comprised between 45° and 90°.

12. Vision system according to any of the preceding claims, wherein the image acquisition devices (3) comprise a synchronized shot device which receives an external signal and is configured to synchronize the shot of the image acquisition devices with the external signal.

13. Vision system according to any of the preceding claims, wherein the light source is configured to project diffused light in a continuous manner.

## Patentansprüche

1. Sichtsystem für eine Prüfvorrichtung, wobei die Prüfvorrichtung dazu ausgelegt ist, eine Reihe von Produkten in einem Prüfbereich (1) bereitzustellen, und das Sichtsystem dazu ausgelegt ist, Bilder des Prüfbereichs (1) zu erfassen, wobei der Prüfbereich eben ist und eine Prüfebene (2) definiert, wobei das Sichtsystem Folgendes umfasst:
eine Vielzahl von Bilderfassungsvorrichtungen (3), wobei jede Bilderfassungsvorrichtung (3) eine Linse umfasst und alle Linsen in einer Linsenebene (4) liegen und wobei der Mittelpunkt jeder Linse auf einer parallel zur Prüfebene (2) verlaufenden Linsenlinie (5) liegt;
eine Lichtquelle, die zum Abgeben von diffusem Licht ausgelegt ist, wobei die Lichtquelle ein lichtemittierendes Element (6) und einen Lichtdiffusor (7) umfasst, wobei der Lichtdiffusor (7) eine Diffusionsstruktur umfasst, die zum Empfangen von Licht von dem lichtemittierenden Element und zum Ausstrahlen von diffusem Licht ausgelegt ist, wobei der Lichtdiffusor einen ebenen rechteckigen Bereich umfasst, der durch eine obere Grundseite (8), eine untere Grundseite (9) und zwei Höhen (10) definiert ist, wobei die obere und die untere Grundseite (8, 9) parallel zur Prüfebene (2) verlaufen und die Höhen (10) senkrecht zu den Grundseiten verlaufen, wobei die obere Grundseite (8) näher an der Linsenlinie (5) liegt als die untere Grundseite (9);
wobei
der ebene rechteckige Bereich einen Winkel zwischen 50° und 70° gegen den Uhrzeigersinn relativ zur Prüfebene (2) bildet;
die Linsenebene (4) einen Winkel zwischen 2° und 10° im Uhrzeigersinn relativ zur Prüfebene (2) bildet;
eine erste Referenzebene (11) als Ebene definiert ist, die die untere Grundseite enthält und parallel zur Prüfebene liegt;
eine zweite Referenzebene (12) als Ebene definiert ist, die die obere Grundseite enthält und parallel zur Prüfebene liegt;
eine dritte Referenzebene (13) als Ebene definiert ist, die senkrecht zur Prüfebene liegt und die obere Grundseite enthält.

2. Sichtsystem nach Anspruch 1, wobei das lichtemittierende Element eine Vielzahl von Festkörperlichtquellen (14) umfasst, die in einer Lichtemissionsebene (15) angeordnet sind, wobei die Lichtemissionsebene parallel zum ebenen rechteckigen Bereich des Lichtdiffusors verläuft.

3. Sichtsystem nach Anspruch 2, wobei die Festkörperlichtquellen (14) Leuchtdioden sind.

4. Sichtsystem nach einem der vorstehenden Ansprüche, wobei der Abstand zwischen der Linsenlinie (5) und der ersten Referenzebene (11) das 1,1- bis 1,4-Fache des Abstands zwischen der ersten Referenzebene (11) und der Prüfebene (2) beträgt.

5. Sichtsystem nach einem der vorstehenden Ansprüche, wobei die Diffusionsstruktur aus behandeltem Polycarbonat oder Polymethylmethacrylat oder einer Kombination daraus besteht.

6. Sichtsystem nach einem der vorstehenden Ansprüche, wobei die Bilderfassungsvorrichtungen (3) gleichmäßig voneinander beabstandet entlang der Linsenlinie (5) angeordnet sind.

7. Sichtsystem nach einem der vorstehenden Ansprüche, wobei die Linsenlinie (5) in dem Raum zwischen der ersten Referenzebene (11) und der zweiten Referenzebene (12) liegt.

8. Sichtsystem nach einem der vorstehenden Ansprüche, wobei die Linsenlinie (5) auf einer Seite der dritten Referenzebene (13) angeordnet ist und der Lichtdiffusor (7) auf der anderen Seite der dritten Referenzebene (13) angeordnet ist.

9. Sichtsystem nach einem der vorstehenden Ansprüche, wobei der Abstand zwischen der oberen Grundseite (8) und der unteren Grundseite (9) größer ist als der Abstand zwischen der ersten Referenzebene (11) und der Prüfebene (2).

10. Sichtsystem nach Anspruch 9, wobei der Abstand zwischen der oberen Grundseite (8) und der unteren Grundseite (9) das 1,3- bis 1,6-Fache des Abstands zwischen der ersten Referenzebene (11) und der Prüfebene (2) beträgt.

11. Sichtsystem nach einem der vorstehenden Ansprüche, wobei das Sichtfeld der Bilderfassungsvorrichtungen (3) zwischen 45° und 90° liegt.

12. Sichtsystem nach einem der vorstehenden Ansprüche, wobei die Bilderfassungsvorrichtungen (3) eine Auslösesynchronisationsvorrichtung umfassen, die ein externes Signal empfängt und dazu ausgelegt ist, das Auslösen der Bilderfassungsvorrichtungen mit dem externen Signal zu synchronisieren.

13. Sichtsystem nach einem der vorstehenden Ansprüche, wobei die Lichtquelle dazu ausgelegt ist, kontinuierlich diffuses Licht auszustrahlen.

## Revendications

1. Système de vision pour un appareil d'inspection, dans lequel l'appareil d'inspection est configuré pour présenter une série de produits dans une zone d'inspection (1) et le système de vision est configuré pour acquérir des images dans la zone d'inspection (1), dans lequel la zone d'inspection est plane et définit un plan d'inspection (2), le système de vision comprenant :
une pluralité de dispositifs d'acquisition d'images (3), dans lequel chaque dispositif d'acquisition d'images (3) comprend un objectif, tous les objectifs étant contenus dans un plan d'objectifs (4), et le point central de chaque objectif étant contenu dans une ligne d'objectifs (5) qui est parallèle au plan d'inspection (2) ;
une source lumineuse configurée pour émettre une lumière diffuse, la source lumineuse comprenant un élément électroluminescent (6) et un diffuseur de lumière (7), dans lequel le diffuseur de lumière (7) comprend une structure de diffusion configurée pour recevoir de la lumière provenant de l'élément électroluminescent et projeter une lumière diffuse, dans lequel le diffuseur de lumière comprend une zone rectangulaire plane définie par une base supérieure (8), une base inférieure (9) et deux hauteurs (10), dans lequel les bases supérieure et inférieure (8, 9) sont parallèles au plan d'inspection (2) et les hauteurs (10) sont perpendiculaires aux bases, dans lequel la base supérieure (8) est plus proche de la ligne d'objectifs (5) que la base inférieure (9) ;
dans lequel
la zone rectangulaire plane forme, dans le sens inverse des aiguilles d'une montre par rapport au plan d'inspection (2), un angle compris entre 50° et 70° ;
le plan d'objectifs (4) forme, dans le sens des aiguilles d'une montre par rapport au plan d'inspection (2), un angle compris entre 2° et 10° ;
un premier plan de référence (11) est défini comme un plan contenant la base inférieure et parallèle au plan d'inspection ;
un deuxième plan de référence (12) est défini comme un plan contenant la base supérieure et parallèle au plan d'inspection ;
un troisième plan de référence (13) est défini comme un plan perpendiculaire au plan d'inspection et contenant la base supérieure.

2. Système de vision selon la revendication 1, dans lequel l'élément électroluminescent comprend une pluralité de sources lumineuses à semi-conducteurs (14) agencées dans un plan d'émission lumineuse (15), dans lequel le plan d'émission lumineuse est parallèle à la zone rectangulaire plane du diffuseur de lumière.

3. Système de vision selon la revendication 2, dans lequel les sources lumineuses à semi-conducteurs (14) sont des diodes électroluminescentes.

4. Système de vision selon l'une quelconque des revendications précédentes, dans lequel la distance entre la ligne d'objectifs (5) et le premier plan de référence (11) est comprise entre 1,1 et 1,4 fois la distance entre le premier plan de référence (11) et le plan d'inspection (2).

5. Système de vision selon l'une quelconque des revendications précédentes, dans lequel la structure de diffusion comprend du polycarbonate traité ou du polyméthacrylate de méthyle, ou une combinaison de ceux-ci.

6. Système de vision selon l'une quelconque des revendications précédentes, dans lequel les dispositifs d'acquisition d'images (3) sont agencés à égale distance les uns des autres le long de la ligne d'objectifs (5).

7. Système de vision selon l'une quelconque des revendications précédentes, dans lequel la ligne d'objectifs (5) est comprise dans l'espace situé entre le premier plan de référence (11) et le deuxième plan de référence (12).

8. Système de vision selon l'une quelconque des revendications précédentes, dans lequel la ligne d'objectifs (5) est agencée d'un côté du troisième plan de référence (13) et le diffuseur de lumière (7) est agencé de l'autre côté du troisième plan de référence (13).

9. Système de vision selon l'une quelconque des revendications précédentes, dans lequel la distance entre la base supérieure (8) et la base inférieure (9) est supérieure à la distance entre le premier plan de référence (11) et le plan d'inspection (2).

10. Système de vision selon la revendication 9, dans lequel la distance entre la base supérieure (8) et la base inférieure (9) est comprise entre 1,3 et 1,6 fois la distance entre le premier plan de référence (11) et le plan d'inspection (2).

11. Système de vision selon l'une quelconque des revendications précédentes, dans lequel les dispositifs d'acquisition d'images (3) présentent un champ de vision compris entre 45° et 90°.

12. Système de vision selon l'une quelconque des revendications précédentes, dans lequel les dispositifs d'acquisition d'images (3) comprennent un dispositif de déclenchement synchronisé qui reçoit un signal externe et est configuré pour synchroniser le déclenchement des dispositifs d'acquisition d'images avec le signal externe.

13. Système de vision selon l'une quelconque des revendications précédentes, dans lequel la source lumineuse est configurée pour projeter de la lumière diffuse de manière continue.
